# EUROPEAN PATENT SPECIFICATION

(11) **EP 3 200 403 B1**
(45) Date of publication and mention of the grant of the patent: **15.07.2020**
(21) Application number: 15844859.7
(22) Date of filing: 21.01.2015
(51) Int. Cl.: H04L 12/703, H04L 12/707, H04L 12/715, H04L 12/705

(54) **PACKET FORWARDING METHOD AND DEVICE, SDN AND SYSTEM**
PAKETWEITERLEITUNGSVERFAHREN UND VORRICHTUNG, SDN UND SYSTEM
PROCÉDÉ ET DISPOSITIF DE TRANSMISSION DE PAQUETS, SDN ET SYSTÈME

(30) Priority: 24.09.2014 CN 201410495827
(43) Date of publication of application: 02.08.2017
(73) Proprietor: ZTE Corporation, Shenzhen, Guangdong 518057 (CN)
(72) Inventor: YE, Weibin, Shenzhen Guangdong 518057 (CN)
(74) Representative: Regimbeau
(86) International application number: PCT/CN2015/071253
(87) International publication number: WO 2016/045276

(56) References cited:
- CN-A- 101 001 165
- CN-A- 103 782 552
- CN-A- 103 986 651
- US-A1- 2011 286 324
- SAHRI N M ET AL: "Fast failover mechanism for software defined networking", FUTURE INTERNET TECHNOLOGIES, ACM, 2 PENN PLAZA, SUITE 701 NEW YORK NY 10121-0701 USA, 18 June 2014 (2014-06-18), pages 1-2, XP058053557, DOI: 10.1145/2619287.2619303 ISBN: 978-1-4503-2942-2
- BRYANT C FILSFILS S PREVIDI CISCO SYSTEMS M SHAND INDEPENDENT CONTRIBUTOR N SO TATA COMMUNICATIONS S: "Remote LFA FRR; draft-ietf-rtgwg-remote-lfa-05.txt", REMOTE LFA FRR; DRAFT-IETF-RTGWG-REMOTE-LFA-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 May 2014 (2014-05-13), pages 1-26, XP015099097, [retrieved on 2014-05-13]
- MACIEJ KU?NIAR ET AL.: 'Automatic failure recovery for software-defined networks' PROCEEDING OF THE SECOND ACM SIGCOMM WORKSHOP ON HOT TOPICS IN SOFTWARE DEFINED NETWORKING 16 August 2013, PAGES 159 160 -, XP058030716

## Description

### TECHNICAL FIELD

The present disclosure relates to the field of communications, and in particular relates to a package forwarding method and device, an SDN (Software Defined Network) and a system.

### BACKGROUND

An SDN is a novel network architecture. The design concept of the SDN is that a control plane and a data forwarding plane of the network are separated from each other, and programmable control is realized. The typical architecture of the SDN includes three layers. An upmost layer is an application layer and includes various different businesses and applications; a control layer in the middle is mainly responsible for processing layout of resources of the data plane and maintaining a network topology, state information and the like; and an infrastructure layer at the bottommost layer is responsible for data processing, forwarding and state collecting based on a flowtable.

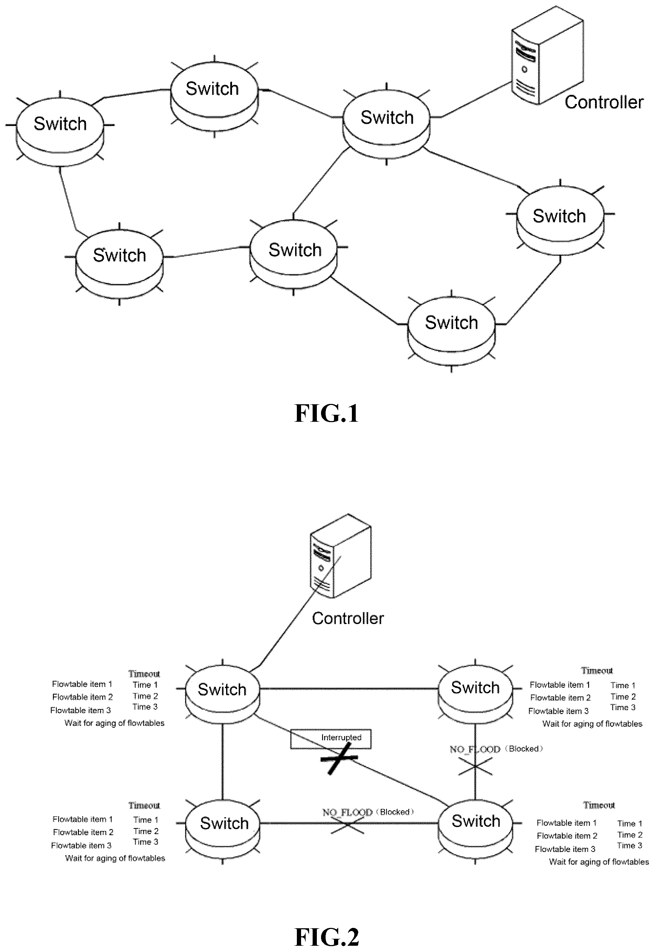

In the existing network, control and forwarding for traffic are realized dependent on a network device; operating systems and special hardware closely coupled with business characteristics are integrated in the device; and the operating systems and the special hardware are developed and designed by every manufacturer. However, in the SDN, the network device is only responsible for pure data forwarding, a hardware architecture of the network device tends to be unified, and all parts of the network device tend to be universal among the manufacturers. The control plane which is originally responsible for routing, security, strategies, QoS (Quality of Service), traffic engineering and the like is realized by a special controller of the SDN. The business functions and characteristics such as routing, security, strategies, QoS (Quality of Service), traffic engineering and the like may be realized through programming. The controller of the SDN does not have fixed requirement for the form of the hardware, may be an device, a virtual machine or a physical server and may completely adopt a universal architecture with high performance and low cost, such as x86. Fig. 1 is an SDN architecture diagram in relevant technologies. As shown in Fig. 1, the SDN architecture is a typical SDN architecture, and a "switch" in the figure is the above "network device".

Fig. 2 is a block diagram illustrating aging of the flowtable in the SDN in the relevant technologies. As shown in Fig. 2, in the SDN, a working process of the SDN is as follows: the controller sends some initial flowtables to the switches for package forwarding after a first start of the switches. The switches forward the packages of the flowtables, which are not matched, to the controller for processing, the controller sends new flowtables to the switches after calculating the new flowtables, and the switches forward the packages according to the new flowtables. Since the network topology is changed, and the traffic capacity of the switches is limited, the switches will not save all the flowtables obtained all the time. Each flowtable item has a timeout field, the switches need to cancel the flowtable items when the flowtable items exceed a certain time, and the operation is called aging. But the mechanism has a problem: the switches cannot immediately know which flowtable items are invalid after the network is interrupted, the switches can only continue to forward the packages according to the existing flowtable items, and new flowtables can be obtained until the flowtables exceed the period of validity and are aged. Namely, the switches can forward the packages to a wrong path before the flowtables are aged, causing that a part of networks are interrupted within a certain time. The problem can be relieved if the aging time is shortened; however, flowtable requests on the controller are greatly increased, causing an increase in the burden to the controller.
Document US2011/286324A1 discloses a method for link failure detection and traffic redirection in an OpenFlow Network. Link failure detection packets, such as bidirectional forwarding detection packets, are periodically sent out on links to peer OpenFlow switches, such as via the Multi-Protocol Label Switching Transport Profile. Link failure detection packets are received from the peer OpenFlow switches on the links, and monitored. A link failure is detected if no incoming link failure detection packets are received on a link for a predetermined interval. In the event of a link failure, traffic is redirected from the failed link to a backup link by altering entries on a flow table of the OpenFlow switch.
Document "Fast failover mechanism for software defined networking - OpenFlow based", Sahri N. M et al., FUTURE INTERNET TECHNOLOGIES, ACM, 2 Penn Plaza, Suite 701 New York NY 10121-0701 USA, 18 June 2014, discloses a fast and efficient failover mechanism for redirecting traffic flows to optimal path when there is a link failure or congestion problem. This mechanism uses the switch flow entry expiry feature to reroute traffic to backup path and additional help of buffer in OpenFlow switches to reduce switching delay and packet loss.

An effective solution is not proposed at present with regard to the problem of longer recovery time of the network after interruption in the relevant technologies.

### SUMMARY

The present invention is defined in the independent claims.
The dependent claims define particular embodiments of the invention:
The present disclosure provides a package forwarding method according to claim 1, a package forwarding device according to claim 4, an SDN according to claim 7 and a system according to claim 8, so as to at least solve the problem of longer recovery time of a network after interruption in relevant technologies. Claims 2 and 3 concern embodiments of the method. Claims 5 and 6 concern embodiments of the device.

Through the present disclosure, the link in the SDN is detected to be interrupted, the replacement link, which is used for replacing the interrupted link and in which number of segment of link in the blocked state is only one, is determined, the replacement link in the blocked state is connected, and the package is forwarded according to the replacement link after connection, thereby solving the problem of longer recovery time of the network after interruption in the relevant technologies, so as to achieve an effect of shortening the recovery time of the network after interruption.

### BRIEF DESCRIPTION OF DRAWINGS

Drawings described herein are used for providing further understanding for the present disclosure and form a part of the present application. Schematic embodiments of the present disclosure and the description for schematic embodiments are used for explaining the present disclosure and do not limit the present disclosure. In the drawings:
Fig. 1 is an architecture diagram illustrating an SDN in relevant technologies;
Fig. 2 is a block diagram illustrating aging of a flowtable in the SDN in the relevant technologies;
Fig. 3 is a flow chart illustrating a package forwarding method according to embodiments of the present disclosure;
Fig. 4 is a structural block diagram illustrating a package forwarding device according to embodiments of the present disclosure;
Fig. 5 is a preferred structural block diagram illustrating a package forwarding device according to embodiments of the present disclosure;
Fig. 6 is a structural block diagram illustrating a forwarding module 48 in a package forwarding device according to embodiments of the present disclosure;
Fig. 7 is a structural block diagram illustrating a processing module 46 in a package forwarding device according to embodiments of the present disclosure;
Fig. 8 is a structural block diagram illustrating an SDN according to embodiments of the present disclosure;
Fig. 9 is a structural block diagram illustrating a system according to embodiments of the present disclosure;
Fig. 10 is a flow chart illustrating an SDN rerouting method according to embodiments of the present disclosure;
Fig. 11 is a block diagram 1 illustrating SDN rerouting according to embodiments of the present disclosure;
Fig. 12 is a block diagram 2 illustrating the SDN rerouting according to embodiments of the present disclosure; and
Fig. 13 is a block diagram 3 illustrating the SDN rerouting according to embodiments of the present disclosure.

### DETAILED DESCRIPTION

The present disclosure is described below in detail with reference to the drawings and in combination with embodiments. It should be noted that, embodiments in the present application and the features in embodiments can be combined without conflict.

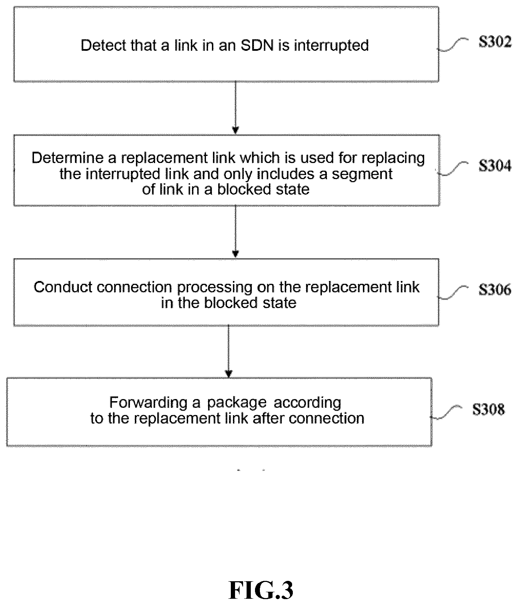

The present embodiment provides a package forwarding method. Fig. 3 is a flow chart illustrating the package forwarding method according to embodiments of the present disclosure. As shown in Fig. 3, the flow includes the following steps:
step S302, a link in an SDN is detected to be interrupted;
step S304, a replacement link, which is used for replacing the interrupted link and in which number of segment of link in a blocked state is only one, is determined;
step S306, the replacement link in the blocked state is connected; and
step S308, a package is forwarded according to the replacement link after connection.

Through the above steps, the link in the SDN is detected to be interrupted, the replacement link, which is used for replacing the interrupted link and in which number of segment of link in the blocked state is only one, is determined, the replacement link in the blocked state is connected, and the package is forwarded according to the replacement link after connection, thereby realizing fast selection for the replacement link and forwarding the package by the replacement link when the link of the network is interrupted, and solving the problem of longer recovery time of the network after interruption in the relevant technologies, so as to achieve an effect of shortening the recovery time of the network after interruption

In one preferred embodiment, before the step of detecting that the link in the SDN is interrupted, the method also includes: a reserved flowtable used for forwarding the package is backuped, thereby ensuring that the original flowtable can be quickly obtained when the flowtable needs to be acquired, so as to shorten the update time of the flowtable.

In one preferred embodiment, the step of forwarding the package via the replacement link after connection includes: the reserved flowtable is acquired; an update flowtable is determined according to the replacement link and the reserved flowtable; and the package is forwarded according to the update flowtable, so that the original interrupted link is replaced by the replacement link, therefore, the network is recovered to be normal.

In one preferred embodiment, the step of conducting connection processing on the replacement link in the blocked state includes: messages for cancelling a blocked state of ports are sequentially sent to switches at two ends of the link in the blocked state; and the replacement link is connected according to the messages.

The present embodiment also provides a package forwarding device, which is used for realizing above embodiments and the preferred implementation manners, and the described contents are not repeated again. For example, a term "module" used below may realize a combination of software and/or hardware with reserved functions. Although the device described in following embodiments is better realized by the software, the realization by the hardware or the combination of the software and the hardware is also possible and is conceived.

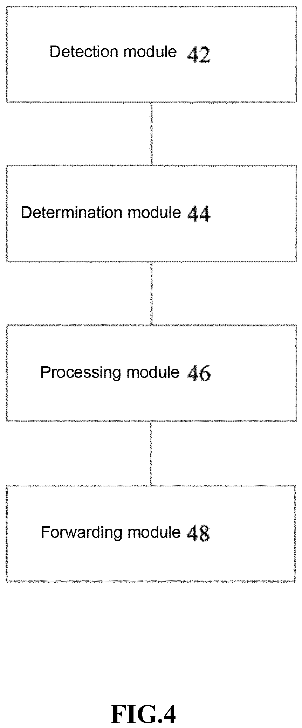

Fig. 4 is a structural block diagram illustrating the package forwarding device according to embodiments of the present disclosure. As shown in Fig. 4, the device includes a detection module 42, a determination module 44, a processing module 46 and a forwarding module 48. The device is described below.

The detection module 42 is configured to detect that the link in the SDN is interrupted; the determination module 44 is connected to the detection module 42 and is configured to determine the replacement link which is used for replacing the interrupted link and in which number of segment of link in the blocked state is only one; the processing module 46 is connected to the determination module 44 and is configured to conduct connection processing on the replacement link in the blocked state; and the forwarding module 48 is connected to the processing module 46 and is configured to forward the package via the replacement link after connection.

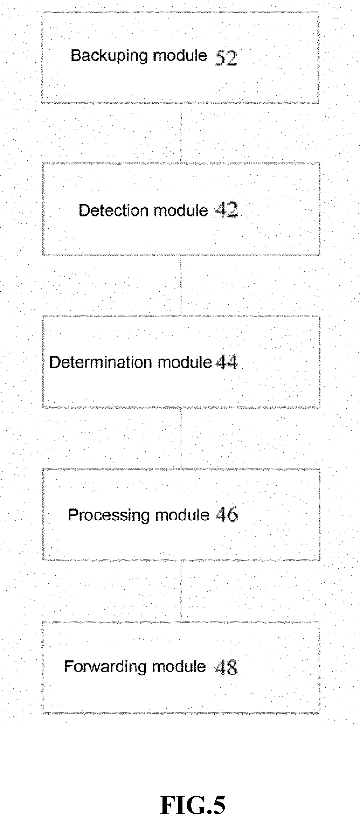

Fig. 5 is a preferred structural block diagram illustrating the package forwarding device according to embodiments of the present disclosure. As shown in Fig. 5, the device also includes a backuping module 52 in addition to all the modules shown in Fig. 4. The device is described below.

The backuping module 52 is connected to the detection module 42 and is configured to backup the reserved flowtable used for forwarding the package.

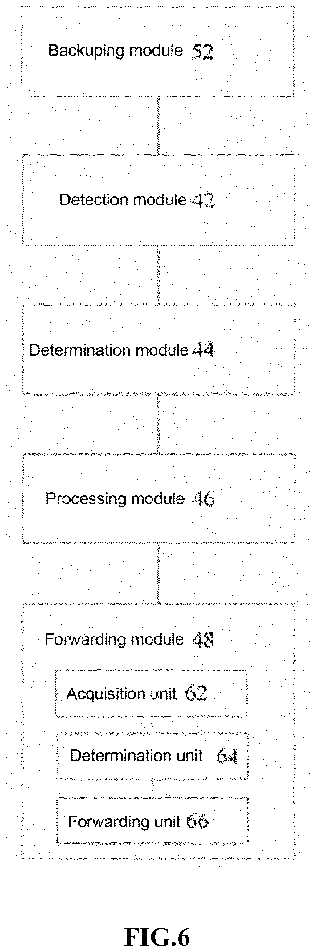

Fig. 6 is a structural block diagram illustrating the forwarding module 48 in the package forwarding device according to embodiments of the present disclosure. As shown in Fig. 6, the forwarding module 48 includes an acquisition unit 62, a determination unit 64 and a forwarding unit 66. The forwarding module 48 is described below.

The acquisition unit 62 is configured to acquire the reserved flowtable; the determination unit 64 is connected to the acquisition unit 62 and is configured to determine the update flowtable according to the replacement link and the reserved flowtable; and the forwarding unit 66 is connected to the determination unit 64 and is configured to forward the package via the update flowtable.

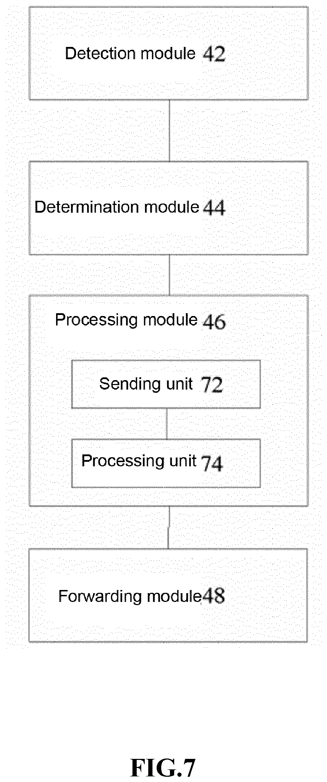

Fig. 7 is a structural block diagram illustrating the processing module 46 in the package forwarding device according to embodiments of the present disclosure. As shown in Fig. 7, the processing module 46 includes a sending unit 72 and a processing unit 74. The processing module 46 is described below.

The sending unit 72 is configured to sequentially send the messages for cancelling the blocked state of the ports to the switches at the two ends of the link in the blocked state; and the processing unit 74 is connected to the sending unit 72 and is configured to conduct connection processing on the replacement link according to the messages.

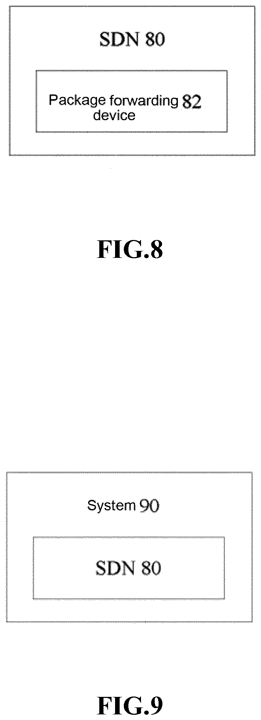

Fig. 8 is a structural block diagram illustrating an SDN according to embodiments of the present disclosure. As shown in Fig. 8, the SDN 80 includes any of the above package forwarding device 82.

Fig. 9 is a structural block diagram illustrating a system according to embodiments of the present disclosure. As shown in Fig. 9, the system 90 includes the SDN 80.

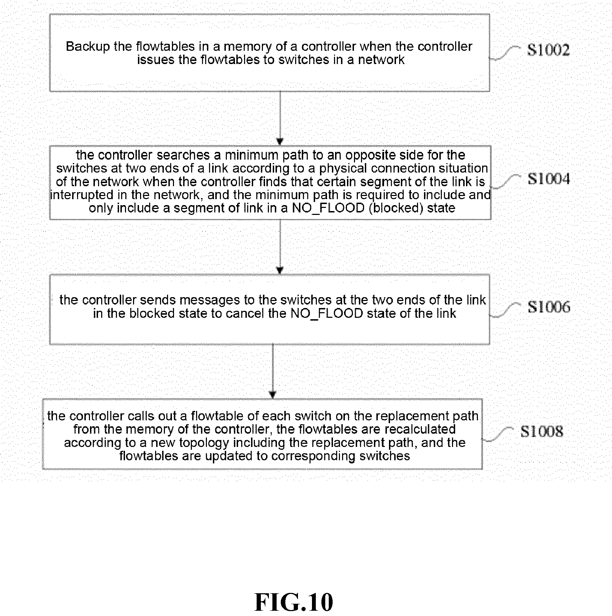

With regard to the problem of longer recovery time of the network after interruption in the relevant technologies, embodiments of the present disclosure also provide an SDN rerouting method. Fig. 10 is a flow chart illustrating the SDN rerouting method according to embodiments of the present disclosure. As shown in Fig. 10, the method includes the following steps:

step S1002, the flowtables are backuped in a memory of a controller when the controller issues the flowtables to switches in a network;

step S1004, the controller searches a minimum path to an opposite side for the switches at two ends of a link according to a physical connection situation of the network when the controller finds that certain segment of the link is interrupted in the network, and number of link in a NO_FLOOD (blocked) state in the minimum path is required to be only one. The minimum path is called a "replacement path" (in order to avoid a loop, redundant links in the network are all in a blocked state. At this moment, since the replacement path includes the blocked link, the replacement path is blocked);

step S1006, the controller sends messages to the switches at the two ends of the link in the blocked state to cancel the NO_FLOOD state cancel of the link, therefore, the original segment of the link in the blocked state is recovered to be in a normal communication state, and the replacement path is in an unblocked state; and

step S1008, the controller calls out a flowtable of each switch on the replacement path from the memory of the controller, the flowtables are recalculated according to a new topology including the replacement path, and the flowtables are updated to corresponding switches. At this moment, the replacement path replaces the original interrupted link, and the network is recovered to be normal.

Through the above method, the rerouting can be accelerated, and the abnormal time of the network is shortened when the network is interrupted; in addition, the controller only needs to update the flowtables for a small quantity of switches, therefore, the calculated amount is small, and the working load of the controller can also be reduced.

The implementation of the technical solution in embodiments of the present disclosure is further described in detail in combination with the drawings:

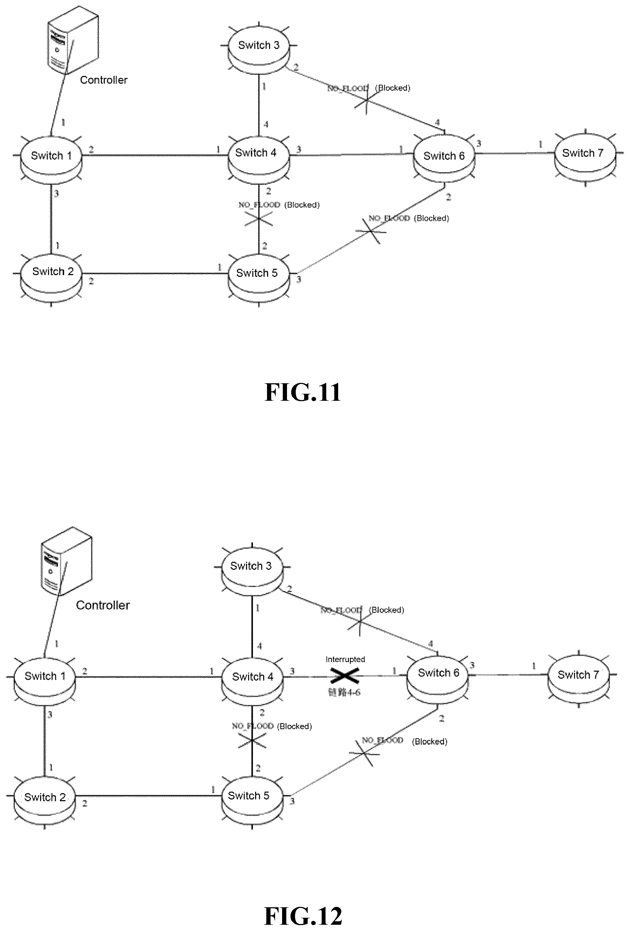

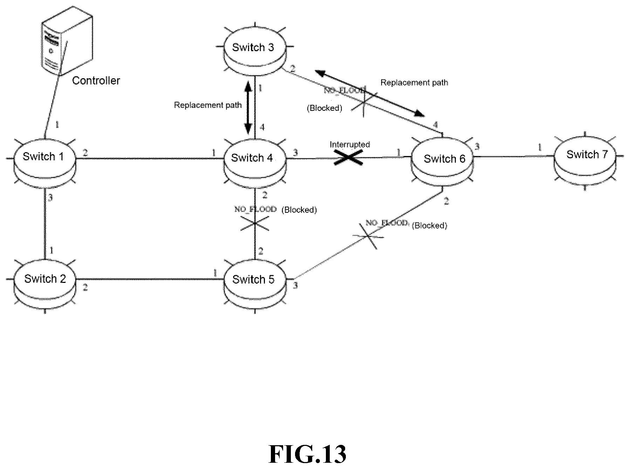

Fig. 11 is a block diagram 1 illustrating SDN rerouting according to embodiments of the present disclosure, Fig. 12 is a block diagram 2 illustrating the SDN rerouting according to embodiments of the present disclosure, and Fig. 13 is a block diagram 3 illustrating the SDN rerouting according to embodiments of the present disclosure. Figs. 11-13 are respectively staged structural block diagrams illustrating the SDN rerouting. As shown in Figs. 11-13, one controller and seven switches managed by the controller are arranged in the network, and the switches forward the packages according to the flowtables issued by the controller. The controller backups the flowtable of each switch in the memory of the controller. The network has redundant paths, and in order to avoid the loop, a spanning tree algorithm is usually used, so that the redundant paths are in a NO_FLOOD (blocked) state.

It is assumed that a link (link 4-6) between the switch 4 and the switch 6 is interrupted, and the switch 4 sends a message to inform the controller the state according to an openflow protocol. The controller calculates a minimum path replacing the "link 4-6" according to the physical connection situation of the network after the controller knows that the link 4-6 is interrupted. Through calculation, two optional minimum paths including a path "switch 4-3-6" and a path "switch 4-5-6" are obtained. In embodiments of the present disclosure, the loop is formed in the network if two or more than two segments of replacement paths of the NO_FLOOD link are included, therefore, number of link in the NO_FLOOD state in the selected replacement path should be only one; and the path "switch 4-3-6" includes a segment of NO_FLOOD link, while the path "switch 4-5-6" includes two segments of NO_FLOOD links, therefore, the path "switch 4-3-6" shall be selected as the replacement path.

Next, the controller firstly sends messages of cancelling the NO_FLOOD state of the port 2 to the switch 3, a path from the switch 3 to the switch 6 is broken through, then the controller sends a message of cancelling the NO_FLOOD state of the port 4 to the switch 6, and a path from the switch 6 to the switch 3 is broken through. Therefore, the replacement path "switch 4-3-6" is already in an unblocked state.

Although the replacement path is unblocked at this moment, the flowtables of the switches are not updated, and the package is not forwarded to the replacement path. Since the replacement path includes the switches 4, 3 and 6, the controller calls out the flowtables of the switches 4, 3 and 6 from the memory, calculation is carried out according to a new network topology, and new flowtables are sent to the switches 4, 3 and 6. In this way, the package is adjusted from the interrupted link to the replacement link.

Through above embodiments of the present disclosure, the controller can quickly select the switches with the flowtables required to be updated, and quickly issue the new flowtables to the switches when the link of the network is interrupted on the premise of not increasing the burden to the controller, so that the network can be quickly recovered to be normal.

Apparently, those skilled in the art should understand that, all the modules or all the steps of the present disclosure may be realized by a universal computer device and may be concentrated on a single computer device or distributed on a network formed by a plurality of computer device. Optionally, all the modules or all the steps of the present disclosure may be realized by computer executable program codes; therefore, all the modules or all the steps of the present disclosure may be stored in a storing device and executed by the computer device. In addition, in some situations, the steps shown or described may be executed in a sequence different from the above description; or all the modules or all the steps of the present disclosure are respectively made into integrated circuit modules, or a plurality of modules or steps therein are made into a single integrated circuit. In this way, the present disclosure is not limited to any specific combination of software and hardware.

The above descriptions are only preferred embodiments of the present disclosure, rather than a limit to the present disclosure. The present disclosure may have various modifications and changes for those skilled in the art. Any modification, improvement and the like made within the scope of the appended claims shall be included in the protection scope of the present disclosure.

## Claims

1. A package forwarding method for a Software Defined Network, called SDN,
wherein the SDN comprises: a controller, a plurality of switches, links between the switches, wherein the links comprise redundant segments, each of the redundant segments is between two respective ones of the plurality of switches and is configured in a blocked state for avoiding a loop,
the method comprises:
detecting (S302), by the controller, that a link in the SDN is interrupted;
determining (S304), by the controller, a replacement link for replacing the interrupted link, wherein the replacement link includes only one redundant segment;
sending (S1006), by the controller, messages for cancelling the blocked state to switches at two ends of the one redundant segment in the replacement link,
conducting connection processing (S306) on the replacement link according to the messages; and
forwarding (S308) a package via the replacement link after connection.

2. The method according to claim 1, before the detecting (S302) that the link in the SDN is interrupted, further comprising:
backuping (S1002) a reserved flowtable used for forwarding the package.

3. The method according to claim 2, wherein the forwarding (S308) of the package via the replacement link after connection comprises:
acquiring the reserved flowtable;
determining an update flowtable according to the replacement link and the reserved flowtable; and
forwarding the package via the update flowtable.

4. A package forwarding device for a Software Defined Network, called SDN,
wherein the SDN comprises: a controller, a plurality of switches, links between the switches, wherein the links comprise redundant segments, each of the redundant segments is between two respective ones of the plurality of switches and is configured in a blocked state for avoiding a loop,
the device comprises:
a detection module (42), configured to detect that a link in the SDN is interrupted;
a determination module (44), configured to determine a replacement link for replacing the interrupted link, wherein the replacement link includes only one redundant segment;
a processing module (46), configured to send messages for cancelling the blocked state to switches at two ends of the one redundant segment in the replacement link, and to conduct connection processing on the replacement link according to the messages; and
a forwarding module (48), configured to forward a package via the replacement link after connection.

5. The device according to claim 4, further comprising:
a backuping module (52), configured to backup a reserved flowtable used for forwarding the package.

6. The device according to claim 5, wherein the forwarding module (48) comprises:
an acquisition unit (62), configured to acquire the reserved flowtable;
a determination unit (64), configured to determine an update flowtable according to the replacement link and the reserved flowtable; and
a forwarding unit (66), configured to forward the package via the update flowtable.

7. A Software Defined Network, called SDN, comprising the device in any of claims 4-6.

8. A system, comprising the SDN in claim 7.

## Patentansprüche

1. Paketweiterleitungsverfahren für ein softwaredefiniertes Netzwerk, das als SDN bezeichnet wird, wobei
das SDN Folgendes umfasst: eine Steuerung, eine Vielzahl von Switches, Links zwischen den Switches, wobei die Links redundante Segmente umfassen, wobei sich jedes der redundanten Segmente zwischen jeweils zwei der Vielzahl von Switches befindet und in einem blockierten Zustand zum Vermeiden einer Schleife ausgelegt ist,
das Verfahren Folgendes umfasst:
Detektieren (S302) durch die Steuerung, dass ein Link im SDN unterbrochen ist;
Bestimmen (S304) eines Ersatzlinks zum Ersetzen des unterbrochenen Links durch die Steuerung, wobei der Ersatzlink nur ein redundantes Segment beinhaltet;
Senden (S1006) von Nachrichten zum Abbrechen des blockierten Zustands durch die Steuerung an Switches an zwei Enden des einen redundanten Segments im Ersatzlink,
Durchführen einer Verbindungsverarbeitung (S306) am Ersatzlink gemäß den Nachrichten; und
Weiterleiten (S308) eines Pakets nach der Verbindung via den Ersatzlink.

2. Verfahren nach Anspruch 1, das vor dem Detektieren (S302), dass der Link im SDN unterbrochen ist, ferner Folgendes umfasst:
Sichern (S1002) einer reservierten Flusstabelle, die zum Weiterleiten des Pakets verwendet wird.

3. Verfahren nach Anspruch 2, wobei das Weiterleiten (S308) des Pakets nach der Verbindung via den Ersatzlink Folgendes umfasst:
Erfassen der reservierten Flusstabelle;
Bestimmen einer aktualisierten Flusstabelle gemäß dem Ersatzlink und der reservierten Flusstabelle; und
Weiterleiten des Pakets via die aktualisierte Flusstabelle.

4. Paketweiterleitungsvorrichtung für ein softwaredefiniertes Netzwerk, das als SDN bezeichnet wird, wobei
das SDN Folgendes umfasst: eine Steuerung, eine Vielzahl von Switches, Links zwischen den Switches, wobei die Links redundante Segmente umfassen, wobei sich jedes der redundanten Segmente zwischen jeweils zwei der Vielzahl von Switches befindet und in einem blockierten Zustand zum Vermeiden einer Schleife ausgelegt ist,
die Vorrichtung Folgendes umfasst:
ein Detektionsmodul (42), das dazu ausgelegt ist, zu detektieren, dass ein Link im SDN unterbrochen ist;
ein Bestimmungsmodul (44), das dazu ausgelegt ist, zum Ersetzen des unterbrochenen Links einen Ersatzlink zu bestimmen, wobei der Ersatzlink nur ein redundantes Segment beinhaltet;
ein Verarbeitungsmodul (46), das dazu ausgelegt ist, zum Abbrechen des blockierten Zustands Nachrichten an Switches an zwei Enden des einen redundanten Segments im Ersatzlink zu senden und eine Verbindungsverarbeitung gemäß den Nachrichten am Ersatzlink durchzuführen; und
ein Weiterleitungsmodul (48), das dazu ausgelegt ist, ein Paket nach der Verbindung via den Ersatzlink weiterzuleiten.

5. Vorrichtung nach Anspruch 4, die ferner Folgendes umfasst:
ein Sicherungsmodul (52), das dazu ausgelegt ist, eine reservierte Flusstabelle, die zum Weiterleiten des Pakets verwendet wird, zu sichern.

6. Vorrichtung nach Anspruch 5, wobei das Weiterleitungsmodul (48) Folgendes umfasst:
eine Erfassungseinheit (62), die dazu ausgelegt ist, die reservierte Flusstabelle zu erfassen;
eine Bestimmungseinheit (64), die dazu ausgelegt ist, gemäß dem Ersatzlink und der reservierten Flusstabelle eine aktualisierte Flusstabelle zu bestimmen; und
eine Weiterleitungseinheit (66), die dazu ausgelegt ist, das Paket via die aktualisierte Flusstabelle weiterzuleiten.

7. Softwaredefiniertes Netzwerk, das als SDN bezeichnet wird, die Vorrichtung nach einem der Ansprüche 4 bis 6 umfasst.

8. System, das das SDN nach Anspruch 7 umfasst.

## Revendications

1. Procédé de transfert de package pour un Réseau Défini par Logiciel, appelé SDN, dans lequel le SDN comprend : un contrôleur, une pluralité de commutateurs, des liaisons entre les commutateurs, dans lequel les liaisons comprennent des segments redondants, chacun des segments redondants se situe entre deux commutateurs respectifs de la pluralité de commutateurs et est configuré dans un état bloqué pour éviter une boucle,
le procédé comprend :
la détection (S302), par le contrôleur, qu'une liaison dans le SDN est interrompue ;
la détermination (S304), par le contrôleur, d'une liaison de remplacement pour remplacer la liaison interrompue, dans lequel la liaison de remplacement n'inclut qu'un seul segment redondant ;
l'envoi (S1006), par le contrôleur, de messages pour annuler l'état bloqué à des commutateurs à deux extrémités du seul segment redondant dans la liaison de remplacement,
la réalisation d'un traitement de connexion (S306) sur la liaison de remplacement selon les messages ; et
le transfert (S308) d'un package via la liaison de remplacement après connexion.

2. Procédé selon la revendication 1, avant la détection (S302) que la liaison dans le SDN est interrompue, comprenant en outre :
la sauvegarde (S1002) d'une table de flux réservée utilisée pour transférer le package.

3. Procédé selon la revendication 2, dans lequel le transfert (S308) du package via la liaison de remplacement après connexion comprend :
l'acquisition de la table de flux réservée ;
la détermination d'une table de flux de mise à jour selon la liaison de remplacement et la table de flux réservée ; et
le transfert du package via la table de flux de mise à jour.

4. Dispositif de transfert de package pour un Réseau Défini par Logiciel, appelé SDN, dans lequel le SDN comprend : un contrôleur, une pluralité de commutateurs, des liaisons entre les commutateurs, dans lequel les liaisons comprennent des segments redondants, chacun des segments redondants se situe entre deux commutateurs respectifs de la pluralité de commutateurs et est configuré dans un état bloqué pour éviter une boucle,
le dispositif comprend :
un module de détection (42), configuré pour détecter qu'une liaison dans le SDN est interrompue ;
un module de détermination (44), configuré pour déterminer une liaison de remplacement pour remplacer la liaison interrompue, dans lequel la liaison de remplacement n'inclut qu'un seul segment redondant ;
un module de traitement (46), configuré pour envoyer des messages pour annuler l'état bloqué à des commutateurs à deux extrémités du seul segment redondant dans la liaison de remplacement, et pour réaliser un traitement de connexion sur la liaison de remplacement selon les messages ; et
un module de transfert (48), configuré pour transférer un package via la liaison de remplacement après connexion.

5. Dispositif selon la revendication 4, comprenant en outre :
un module de sauvegarde (52), configuré pour sauvegarder une table de flux réservée utilisée pour transférer le package.

6. Dispositif selon la revendication 5, dans lequel le module de transfert (48) comprend :
une unité d'acquisition (62), configurée pour acquérir la table de flux réservée ;
une unité de détermination (64), configurée pour déterminer une table de flux de mise à jour selon la liaison de remplacement et la table de flux réservée ; et
une unité de transfert (66), configurée pour transférer le package via la table de flux de mise à jour.

7. Réseau Défini par Logiciel, appelé SDN, comprenant le dispositif de l'une quelconque des revendications 4 à 6.

8. Système, comprenant le SDN de la revendication 7.
